## Europäisches Patentamt
## European Patent Office
## Office européen des brevets

(11) Veröffentlichungsnummer: **0 281 869**
**A1**

# (12) EUROPÄISCHE PATENTANMELDUNG

(21) Anmeldenummer: 88102857.5

(22) Anmeldetag: 26.02.88

(51) Int. Cl.4: **B60K 23/02**, B60K 17/02

(30) Priorität: 09.03.87 HU 98487

(43) Veröffentlichungstag der Anmeldung:
14.09.88 Patentblatt 88/37

(84) Benannte Vertragsstaaten:
AT BE CH DE ES FR GB GR IT LI LU NL SE

(71) Anmelder: Puglits, János, Dr. Dipl.-Ing.
Zolyomi ut 13
H-1118 Budapest(HU)

Anmelder: Ratsko, Istvan, Dr. Dipl.-Ing.
Zolyomi ut 13
H-1118 Budapest(HU)

Anmelder: Váradi, János, Dipl.-Ing.
Tallér utca 8
H-1145 Budapest(HU)

Anmelder: Madocsay, Attila, Dipl.-Ing.
Tárnok utca 5
H-1014 Budapest(HU)

(72) Erfinder: Puglits, János, Dr. Dipl.-Ing.
Zolyomi ut 13
H-1118 Budapest(HU)
Erfinder: Ratsko, Istvan, Dr. Dipl.-Ing.
Zolyomi ut 13
H-1118 Budapest(HU)
Erfinder: Váradi, János, Dipl.-Ing.
Tallér utca 8
H-1145 Budapest(HU)
Erfinder: Madocsay, Attila, Dipl.-Ing.
Tárnok utca 5
H-1014 Budapest(HU)

(74) Vertreter: Lemcke, Rupert, Dipl.-Ing. et al
Amalienstrasse 28 Postfach 4026
D-7500 Karlsruhe 1(DE)

(54) **Pneumatische Vorrichtung zur automatischen Kupplung-Betätigung von Kraftfahrzeugen.**

(57) Die Erfindung betrifft eine pneumatische Vorrichtung zur automatischen Kupplungbetätigung von Kraftfahrzeugen, hauptsächlich von mit OTTO-Motoren betriebenen Personenkraftwagen und Autobussen. Diese weist ein elektropneumatisches Steuerventil (12) auf, das mit einem, die Kupplung betätigenden pneumatischen Arbeitsorgan verbunden ist. Das elektropneumatische Steuerventil (12) ist über eine, mit dem Saugrohr (1) des Motors verbundene Vakuumleitung (13), sowie über eine Drosselung mit der Aussenluft zu verbinden. Ferner ist das Steuerventil (12) mit einem Schalter (11) am Gangschalthebel (5) des Kraftfahrzeuges elektrisch verbunden. Das Wesen der Erfindung besteht darin, dass die Vorrichtung als - mit unveränderter Beibehaltung ihrer Originalbauteile und ihrer funktionalen Aufgaben - auch nachträglich in das Kraftfahrzeug einbaubarer, zusätzlicher Adapter (6) ausgestaltet ist,

bei welcher das elektropneumatische Steuerventil (12) mit einer drehzahlabhängigen Steuereinheit (20) verbunden ist, ferner parallel zum elektropneumatischen Steuerventil (12) zwischen der Vakuumleitung (13) und der Luftleitung (14) des pneumatischen Arbeitsorgans, vorzugsweise einer Membrane (9), ein depressionabhängiges Drosselventil (19) eingebaut ist.

Fig. 1

2

# Pneumatische Vorrichtung zur automatischen Kupplung-Betätigung von Kraftfahrzeugen

Die Erfindung betrifft eine pneumatische Vorrichtung zur automatischen Kupplung-Betätigung von Kraftfahrzeugen, die vorzugsweise bei jenen Personenkraftwagen und Autobussen zum Einsatz kommen, die mit OTTO-Motoren versehen sind.

Beim Steuern von Kraftfahrzeugen muss der Fahrer (Pilot) im allgemeinen drei Pedale betätigen, nämlich das Gaspedal, das Bremspedal und das Kupplungspedal bei manueller Gangschaltung. Hingegen erübrigt sich bei automatischen Getrieben das Kupplungspedal. Dies ist einerseits in ergonomischer und verkehrssicherheitlicher Hinsicht ein grosser Vorteil, andererseits wird dadurch auch das Kraftfahrzeug geschont.

Nach den Erfahrungen der Praxis sind die bekannten Automatengetriebe sehr teuer, und können bei einer üblichen mittleren Reparaturausrüstung kaum ausgebessert werden, ferner beeinträchtigen sie auch die Leitungsfähigkeit und die Wirtschaftlichkeit des Fahrzeuges. Beispielsweise ist der Treibstoffverbrauch der mit hydrodynamischen Getrieben versehene Kraftwagen um 10 % bis 15 % höher, als die der Wagen mit manuell betätigten Schaltgetrieben. Aus den obigen Gründen haben sich die automatischen Getriebe - mit Ausnahme der USA - in anderen Ländern nur in beschränktem Masse durchgesetzt bzw. verbreitet.

Bekannt sind ferner jene Bemühungen, wonach die Betätigung der durch Friktion wirkenden herkömmlichen Kupplungen automatisiert werden soll. Z.B. wird in dem Buch von Zoltán TERNAI: "Die automatischen Kupplungen und Getriebe von Kraftwagen" (Technischer Buchverlag, Budapest 1960, Seiten 62-66), ein solcher pneumatischer Kupplungautomat beschrieben, der das zweipedalige Fahren ermöglicht, und das Lösen der Kupplung mit Hilfe eines Vakuums verrichtet. (Eine solche Lösung ist z.B. die im Handel unter dem Namen "SAXOMAT" bekannte Automatik für Personenkraftwagen.)

Bemerkt sei, dass die obige pneumatische Kupplung-Automatik einen organischen Bauteil des Personenkraftfahrzeuges bildet, und der Wagen deshalb kein Kupplungpedal hat, ferner dass die Kupplung selbst eine speziale Zentrifugalvorrichtung ist. Der Arbeitskolben der Kupplung-Automatik wird hier von dem Vakuum im Saugstutzen betätigt, doch seine Steuerung erfolgt durch ein elektropneumatisches Ventil. Der Gangschalthebel ist mit einem elektrischen Schalter versehen, sodass die Betätigung der Wellenkupplung jeweils durch ein Umstellen des Schalthebels ausgelöst wird. Dabei wird der Stromkreis des elektropneumatischen Ventils durch den Gangschalterhebel geschlossen, wobei dieser den Arbeitskolben mit dem Saugrohr des Motors verbindet. Durch die Depression wird der Arbeitskolben eingezogen, und als Folge hiervon wird die Kupplung gelöst. Nach Beendigung des Gangwechsels öffnet sich der Elektroschalter. Dabei verbindet das elektropneumatische Ventil den Arbeitszylinder - über eine Drosselung - mit dem Aussenluftraum, d.h. es schliesst sich die Kupplung.

Wie es oben bereits erwähnt wurde, erfordert eine solche pneumatische Kupplungsautomatik - als organischer Teil des Kraftwagens - einen relativ grossen Aufwand; hinsichtlich der Reparaturen und des Service-Dienstes aber ein qualifiziertes, hochgeschultes Fachpersonal. Ferner hat erfahrungsgemäss die obige Lösung den Nachteil, dass der Fahrer, sobald er den Schalthebel - selbst ungewollt -fortbewegt,durch die Automatik sofort auch die Kupplung löst. Damit aber wird die Kraftübertragung d.h. also auch die Motorbremsung unterbrochen, was jedoch eine Umfallsgefahr in sich birgt.

Mit der vorliegenden Erfindung war unser gesetztes Ziel die Schaffung einer solchen Kupplungsautomatik, die mit verhältnismässig geringem Aufwand an jedem beliebigen Kraftfahrzeug auch nachträglich eingebaut werden kann, noch dazu unter Beibehaltung der originalen Bauteile des Kraftfahrzeuges; und dass sich ferner auch eine Kupplungsbetätigung bietet, die den jeweiligen Verkehrsverhältnissen besser entspricht und auch verkehrstechnisch sicherer ist.

Die gestellte Aufgabe wurde bei der eingangs beschriebenen pneumatischen Kupplung-Betätigungsvorrichtung dadurch gelöst, dass die erfindungsgemässe pneumatische Vorrichtung am Kraftfahrzeug auch nachträglich - mit Beibehaltung der originalen Bauteile und ihrer Funktionseigenschaften - einbaubarer zusätzlicher Adapter ausgestaltet ist, bei welchem das elektropneumatische Steuerventil mit einer drehzahlabhängigen Steuereinheit versehen ist; ferner parallel zum elektropneumatischen Steuerventil - zwischen der Vakuumleitung und der Luftleitung des pneumatischen Arbeitsorgans - ein depressionabhängiges Drosselventil eingebaut ist.

Nach einem weiteren Merkmal der Erfindung kann zweckmässig die drehzahlabhängige Steuereinheit auch als ein solcher elektrischer Schalter ausgestaltet werden, welcher sich mit der jeweiligen Lage der Drosselklappe in Steuerkontakt befindet. Eine solche Ausführung ist ferner möglich, bei welcher die drehzahlabhängige Steuervorrichtung auch eine elektrische Einheit hat, welche mit einem Drehzahlsignalgeber, dem Schalter des Schalthebels, ferner dem der Drosselklappe zugeordneten Schalter, sowie mit der magnetischen Spule des elektromagnetischen Steuerventils verbunden ist.

Vorteilhaft ist ferner eine solche Ausführung, bei welcher der Einlass des elektromagnetischen Steuerventils mit einem Luftbehälter verbunden ist, dessen Lufteinlass vorteilhaft mit einem regulierbaren Drosselventil versehen ist.

Durch die Anwendung des Luftbehälters oder eines regulierbaren Rückschlagventils kann nämlich im ersten Abschnitt der Kupplungsbetätigung eine schnellere Betätigung im Sinne des Schliessens erzielt werden.

Die Erfindung soll nun an Hand der beigefügten Zeichnungen eingehender erörtert werden, wobei die Zeichnungen ein Ausführungsbeispiel der Erfindung darstellen. Die Zeichnungen zeigen:

Fig. 1: prinzipielle Schaltskizze eines Personenkraftwagens, der mit einer pneumatischen Vorrichtung gemäss der Erfindung versehen ist;

Fig. 2: Schnitt durch ein Detail in Fig. 1, in etwas grösserem Massstab;

Fig. 3: Schnitt durch ein Detail in Fig. 1, in etwas vergrössertem Massstab.

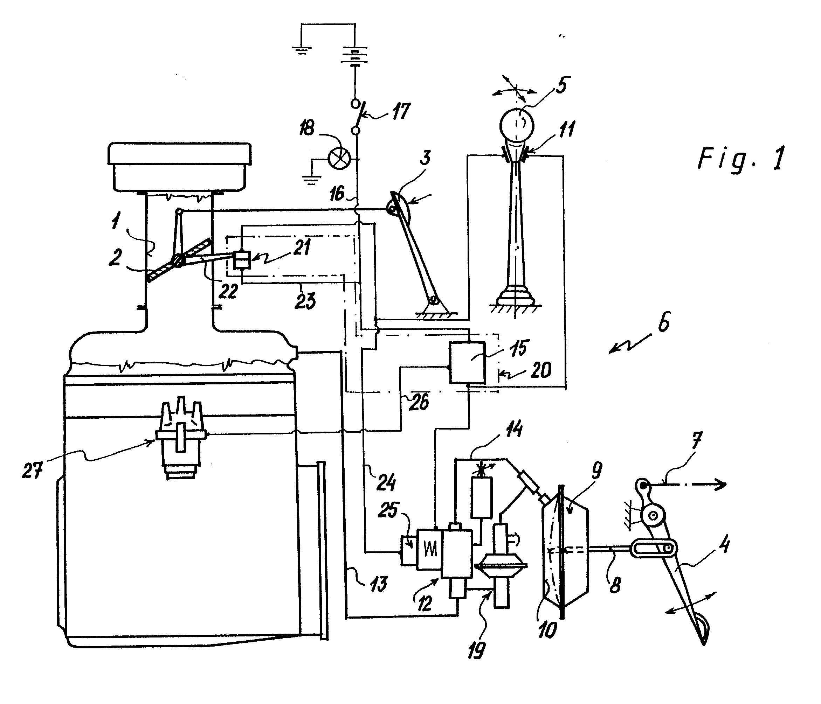

In Fig. 1 wurden die Details des Motors und der Steuerorgane eines Personenkraftwagens (PKW) skizzenhaft dargestellt, wobei ein Saugrohr des Motors mit 1, eine Drosselklappe mit 2, ein mit der Drosselklappe 2 verbundenes Gaspedal mit 3, ein Kupplungspedal mit 4, ein Gangschaltpedal mit 5 bezeichnet wurde.

Die pneumatische Vorrichtung zur Betätigung der Wellenkupplung ist erfindungsgemäss als ein am PKW auch nachträglich einbaubarer (zusätzlicher) Adapter ausgebildet, der als Ganzes mit 6 bezeichnet wurde. Aus Fig. 1 ist zu ersehen, dass das Kupplungspedal 4 über ein nur skizzenhaft eingezeichnetes Gestänge 7 (die eigens nicht eingezeichnete Wellenkupplung betätigt), ferner über eine Stange 8 mit einem die Kupplung betätigenden pneumatischen Arbeits organ, im vorliegenden Fall mit einer Membrane 9 in Verbindung steht. Ein Depressionsraum der Membrane 9 wurde mit 10 bezeichnet.

Am Gangschalthebel 5 ist ein elektrischer Schalter 11 angebracht, welcher in der Grundstellung des Schalthebels 5 in geöffneten Zustand, beim Umlegen des Schalthebels 5 aber in eine beliebige Richtung in geschlossenen Zustand gelangt. (Auf den elektrischen Einbau des Schalters 11 kommen wir noch später unten zurück.)

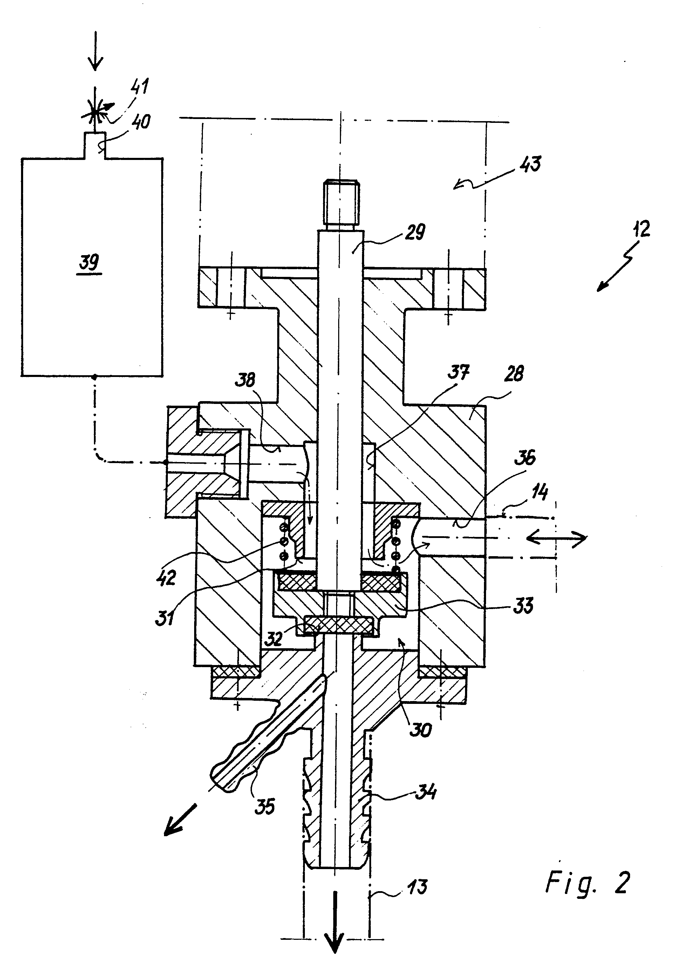

Der erfindungsgemässe Adapter 6 ist mit einem elektropneumatischen Steuerventil 12 versehen (auf dessen Einzelheiten im Zusammenhang mit Fig. 2 näher eingegangen werden soll). Das elektropneumatische Steuerventil 12 ist über eine Vakuumleitung 13 mit dem Saugrohr 1 des Motors verbunden. Andererseits kommuniziert es über eine Luftleitung 14 mit dem Depressionsraum 10 der Membrane 9. Der Elektromagnet des Steuerventils 12 ist in dem dargestellten Falle mit einer elektronischen Reguliereinheit 15 und dem Schalter 11 verbunden und über eine Leitung 16 und einen Schalter 17 an die Speisespannung angeschlossen. Mit dem Schalter 17 kann der erfindungsgemässe Adapter 6 aus-oder einbgeschaltet werden. Im ausgeschalteten Zustand des Schalters 17 kann der PKW in herkömmlicher Weise, d.h. dreipedalig gefahren werden. Im diesen Falle ist an die Leitung 16 eine Signallampe 18 angeschlossen, welche am Instrumentbrett jeweils den Schaltzustand des Adapters 6 anzeigt.

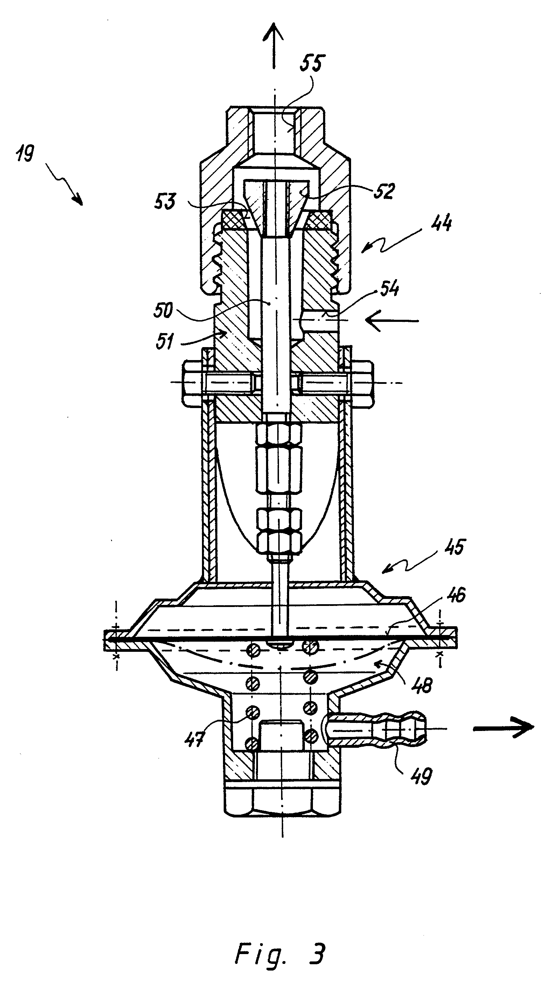

Zwischen der Vakuumleitung 13 und der Luftleitung 14 ist parallel mit dem elektropneumatischen Steuerventil 12 erfindungsgemäss ein depressionabhängiges Drosselventil 19 eingebaut (welches eingehender anhand von Fig. 3 erörtert werden soll).

Nach der Erfindung ist das elektropneumatische Steuerventil 12 mit einer drehzahlabhängigen Steuereinheit 20 in Steuerkontakt. Einen Teil der drehzahlabhängigen Steuereinheit 20 bildet im vorliegenden Falle auch die oben bereits erwähnte elektronische Steuereinheit 15, sowie ein durch die jeweilige Position der Drosselklappe 2 einstellbarer Elektroschalter 21, der hier zum Ein-und Ausschalten dient. Der eine Kontakt des Elektroschalters 21 ist im vorliegenden Falle an einen Hebel 22 angeschlossen, der an der Welle der Drosselklappe 2 mitdrehbar angeordnet ist. Zweckmässig wird der Elektroschalter 21 einstellbar ausgestaltet. Bei unseren Versuchen wurde der an dem PKW-Typ "Renault - 12" eingebaute Elektroschalter 21 des Adapters 6 so eingestellt, dass er bei einer Drehzahl von 1200 U/Min lösen, hingegen bei niedrigeren Drehzahlen als dieser Grenzwert in geschlossenem Zustand verbleiben soll.

Der Elektroschalter 21 wird über eine Leitung 23 an die zweite Eingangsklemme der elektronischen Reguliereinheit 15, über eine andere Leitung 24 an einen elektrischen Halteschalter 25 angeschlossen, der mit dem Elektromagneten des elektropneumatischen Steuerventils 12 zusammenarbeitet. An den dritten Eingang der elektronischen Reguliereinheit 15 wird über eine Leitung 26 ein Drehzahlsignalsender 27 angeschlossen, der im vorliegenden Falle selbst der Zündungsverteilerkopf des Motors ist.

In Fig. 2 sind die Einzelheiten des elektropneumatischen Steuerventils 12 zu sehen. Das Ventilgehäuse wurde mit 28 bezeichnet, in welchem ein Ventilschaft 29 axial verschiebbar gelagert ist. In einem Innenraum 30 des Ventilgehäuses 28 sind Ventilsitze 31 bzw. 32 ausgestaltet, mit denen die obere bzw. untere Fläche eines, am Ventilschaft 29 befestigten Ventiltellers 33 zusammenarbeitet. Ein Rohrstutzen 34 des Ventilgehäuses 28 ist an der Vakuumleitung 13 ange - schlossen; hingegen ist über einen aus diesem abgezweigten Rohrstutzen 35 das Drosselventil 19 mit der Vakuumleitung 13 verbunden (Fig. 1). Eine Öffnung 36 des Ventilgehäuses 28 schliesst an die Luftleitung 14 an, und diese Öffnung 36 kommuniziert mit dem Innenraum 30. Mit dem Innenraum 30 des Ventilgehäuses 28 ist eine andere Öffnung 38 des Ventilgehäuses 28 über einen Ringraum 37 verbunden, an welchen in diesem Falle ein Luftbehälter 39 anschliesst. Der Luftbehälter 39 dient erfindungsgemäss als Pufferkessel und seine mit der Aussenluft kommunizierende Einströmungsöffnung 40 ist mit einem regulierbaren Drosselventil 41 versehen. Gegebenenfalls könnte jedoch der Luftbehälter mit Drosselventil durch ein regelbares Rückschlagventil ersetzt werden.

In der in Fig. 2 dargestellten Stellung befindet sich der Ventilteller 33 in seiner unteren Endstellung, in welcher er den unteren Ventilsitz 32 - schliesst. Der Ventilteller 33 wird in diese untere Grundstellung durch eine Druckfeder 42 geschoben. In dieser Stellung des Ventiltellers 33 steht der Luftbehälter 39 über den Ringruam 37 mit der Luftleitung 14 in Verbindung. Demnach ist also der Depressionsraum 10 der Membrane 9 über den Luftkessel 39 mit dem Aussenluftraum verbunden (Fig. 1).

Das obere Ende des Ventilschaftes 29 ist mit einem, das Steuerventil 12 betätigenden Elektromagneten 43 verbunden. Sobald der Elektromagnet 43 erregt wird, verschiebt sich der Ventilschaft 29 mit dem Ventilteller 33 in die obere Endstellung, wobei der Ventilteller 33 den oberen Ventilsitz 31 - schliesst. In diesem Zustand kann über den Rohrstutzen 34 (der an die Vakuumleitung 13 angeschlossen ist) der Innenraum 30 des Steuerventils 12, sowie auch die Luftleitung 14 unter Vakuum gelangen. Das aber hat zur Folge, dass die Membrane 9 die Kupplung anhebt (Fig. 1).

In Fig. 3 sind die Einzelheiten des depressionsabhängigen Drosselventils 19 zu sehen. Dieses ist im vorliegenden Falle als eine durch eine Membrane betätigte Ventilanordnung ausgestaltet, wobei das Ventil selbst mit 44, die Betätigungsmembrane aber mit 45 bezeichnet ist. Ein Membranblatt 46 der Betätigungsmembrane 45 wird von unten durch eine Druckfeder 47 belastet (vorgespannt), und der Innenraum 48 unter dem Membranblatt 46 ist über den Rohrstutzen 49 an den Rohrstutzen 35 des Steuerventils 12 angeschlossen (Fig. 2).

Die Betätigung des Drosselventils 19 ist erfindungsgemäss jederzeit vom Wert jenes Depressiondruckwertes abhängig, der in dem Saugrohr 1 des Motors vorherrscht. Die Arbeitseigenschaften des Drosselventils könnte durch eine entsprechende Wahl der Charakteristik der Druckfeder 47 beeinflusst werden. Das Membranblatt 46 schliesst (mit seiner Einstellmöglichkeit) an einem Ventilschaft 50 des Ventils 44 an, welcher in einem Ventilgehäuse 51 des Ventils 44 axial verschiebbar angeordnet ist. Am oberen Teil des Ventilschaftes 50 ist ein konischer Ventilteller 52 befestigt, welcher mit einem gleichfalls konisch ausgestalteten Ventilsitz 53 zusammenarbeitet. Das Ventilgehäuse 51 ist mit einer Einströmöffnung 54 versehen, die mit der Aussenluft (Atmosphäre) kommuniziert. Ferner hat es auch eine Ausströmöffnung 55, welche an der Luftleitung 14 anschliesst (Fig. 1).

Sobald in dem Innenraum 48 der Betätigungsmembrane 45 das Vakuum wirkt, nimmt das Membranblatt 46 - der Druckfeder 47 entgegen - den mit dünner gestrichelter Linie eingezeichneten, nach unten deformierten Verlauf an, während das Ventil 44 schliesst. Hört dann das Vakuum auf, so gelangt die Betätigungsmembrane 46 wieder in ihre, in der Zeichnung dargestellte Grundstellung. Gleichzeitig damit öffnet das Ventil 44, und über die Einströmöffnung 54 und Ausströmöffnung 55 des Ventils 44 wird zusätzlich Luft in die Luftleitung 14 eingelassen, um ein - schnelleres Nachlassen (Schliessen) der Kupplung zu erzielen.

Demnach verläuft die Arbeitsweise der erfindungsgemässe Adapter 6 in folgender Weise:

Der Fahrer nimmt seinen Fuss vom Gaspedal 3 weg, wodurch die Drosselklappe 2 in seine Grundstellung gelangt (Fig. 1). Währenddessen kommt im Saugraum des Motors, bei laufendem Motor ein Vakuum (von etwa 0,5 - 0,6 bar) zustande, und damit auch in der Vakuumleitung 13. Nach dem Einschalten des Schalters 17 legt der Fahrer den Schalthebel 5 aus seiner Grundstellung heraus, wonach der elektrische Schalter 11 den Stromkreis schliesst. Danach erhält der Elektromagnet 43 des elektropneumatischen Steuerventils 12 eine Erregung, d.h. er zieht ein, und betätigt damit zugleich auch den als Einziehrelais ausgestalteten Halteschalter 25. (Letzterer hat nämlich die Aufgabe, auch nach dem Zurückgelangenlassen des Schalthebels 5 in die Grundstellung, den gewünschten erregten Zustand aufrecht zu erhalten.) Nach dem Einschalten in den I. Gang drückt der Fahrer das Gaspedal 3 nieder. Bei dem Gasgeben öffnet bei der eingestellten Drehzahl 1200 U/Min der Schalter 21 und unterbricht zugleich über die Leitung 24 den Stromkreis des Halteschalters 25. Dabei kommt und gelangt das elektropneumatische Steuerventil 12 in die in Fig. 2 dargestellte Stellung. Dadurch strömt zunächst aus dem Luftbehälter 39 in schnellerem Tempo, nach Entleerung des Luftbehälters 39 aber über das Drosselventil 41 Aussenluft über die Luftleitung 14 in den Depressionsraum 10 der Membrane 9. Zufolgedessen lässt die Kupplung zuerst langsam, danach aber schneller nach. Dieses Nachlassen (d.h. gesteuertes Schliessen) der Kupplung kann durch eine entsprechende Wahl des Luftbehälter volumens, sowie durch die Einstellung des Drosselventils 41 z.B. entsprechend den jeweiligen Fahrverhältnissen optimal beeinflusst werden.

Im I. Schaltgang kann man nach einem - schonenden Anfahren den Kraftwagen etwas anziehen lassen, und lässt dann das Gaspedal 3 wieder hoch, um in den II. Gang umzuschalten. Da man zum Umschalten auf eine höhere Geschwindigkeitsstufe eines wesentlich schnelleren Schliessens der Kupplung bedarf, tritt hier nun das depressionsabhängige Drosselventil 19 in Aktion. Beim Zurücknehmen des Gases kommt in der Vakuumleitung 13 wieder ein maximales Vakuum zustande. Sobald der Fahrer den Schalthebel 5 aus seiner Grundstellung fortbewegt, gibt das elektropneumatische Steuerventil 12 sofort ein Vakuum an die Membrane 9 ab, welche unverzüglich die Kupplung löst. Bei Gasgeben nimmt in der Vakuumleitung 13 das Vakuum schnell ab. Hiernach lässt - in der schon oben beschriebenen Weise - das elektropneumatische Steuerventil 12 über die Luftleitung 14 Luft in den Depressionsraum 10 der Membrane 9 gelangen, wodurch sie die Kupplung schliesst. Da jedoch das Vakuum stark sinkt, gelangt das Drosselventil 19 in die in Fig. 3 dargestellte Stellung, in welcher sie zusätzliche Aussenluft in die Luftleitung 14 gelangen lässt. Auf diese Weise wird ein schnelleres Schliessen der Kupplung erzielt. Übrigens befindet sich das depressionabhängige Drosselventil 19 bei Vorhandensein eines entsprechenden Vakuums in geschlossener Stellung.

Wir bemerken, dass bei dem sportlichen Anfahren auch im I. Gang schon ein schnelleres Schliessen der Kupplung erzielt werden kann, da ja bei einem raschen Sinken des Vakuums (d.h. bei plötzlichem Gasgeben) auf Grund der Obigen das depressionsabhängige Drosselventil 19 sofort öffnet. (Fig. 3.)

Das Rückschalten aus den Geschwindigkeiten der verschiedenen Gangstufen erfolgt in obigem Sinne, nur in umgekehrter Reihenfolge.

Aus dem Gesagten geht auch folgendes hervor: Wenn der Fahrer Gas gibt, greift er vergeblich an den Gangschalter 5; es geschieht gar nichts, d.h. der erfindungsgemässe Adapter 6 löst die Kupplung nicht.

Zurückkommend auf die elektronische Reguliereinheit 15 sei hier noch erwähnt, dass sie als ein ansich bekanntes elektronisches Gerät ausgebildet ist. Bei unseren Versuchen wurde die elektronische Reguliereinheit 15 so ausgestaltet, dass sie fähig sei, die Betriebsweise des Adapters 6 zu "überwachen". Hierunter verstehen wir, dass der Adapter 6 unter einer eingestellten Drehzahl (z.B. 650 U/Min) die Kupplung zur Vermeidung von "Zerren" löst. Die Anwendung dieser Methode hat sich als besonders vorteilhaft im dichten Stadtverkehr erwiesen, bei einem nur "schrittweisen Vorankommen", da hierbei das Rutschen der Kupplung und ihr Ausschalten je nach den gegebenen Verkehrs-und Fahrverhältnissen mit folgenschwerer Konsequenz und Häufigkeit vorkommt.

Da bei Gasgeben die erfindungsgemässe Vorrichtung die Kupplung gar nicht freigibt, ist auch die Unfallsgefahr beseitigt, die von einem unbeabsichtigten Fortbewegen des Schalthebels 5 herrühren kann.

Gegebenenfalls kann auch die drehzahlabhängige Steuereinheit 20 nur mit dem einstellbaren Elektroschalter 21 ausgestattet werden. In diesem Falle kann die elektronische Reguliereinheit 15 ganz wegbleiben.

Der erfindungsgemässe Adapter 6 ist wegen seiner verhältnismässig einfachen Bauweise billig, und kann auch je nach Belieben auf allen Personenkraftwagen und sonstigen Kraftfahrzeugen bzw. Autobussen nachträglich ohne Zerlegen oder Umändern der ursprünglichen Bauweise und Bauteile eingebaut werden. Dies besagt mit anderen Worten, dass ein mit dem erfindungsgemässen Adapter 6 ausgestattetes Kraftfahrzeug je nach Belieben zwei-oder dreipedalig gefahren werden kann. Bei ausgeschaltetem Adapter 6 kann der Kraftwagen in der herkömmlichen dreipedaligen Weise gefahren werden, was z.B. bei einem Anfahren mit Anschieben vorteilhaft sein kann. Ein wichtiger Vorteil des erfindungsgemässen Adapters 6 besteht darin, dass er in jeder Schaltstufe - angenähert optimal - das Arbeiten der Kupplung sichert: anfangs langsam, dann ein schnelleres Schliessen. Ferner verhindert er auch ein "Abwürgen" des Motors, und trägt damit wesentlich zu einer - schonenden Betriebsweise des Fahrzeuges bei. Es verlängert dadurch seine Lebensdauer, und trägt auch zum völligen Eliminieren der verkehrsbedingten Gefahrsituation massgeblich bei. Ein "Abwürgen" des Motors verhindert sie auch in dem Fall, wenn der Fahrer einen falschen Gang gewählt hat, oder wenn er beim Anhalten des Fahrzeuges den Ganghebel in eingeschalteter Stellung vergessen hat.

## Ansprüche

1. Pneumatische Vorrichtung zur automatischen Kupplungbetätigung von Kraftfahrzeugen, vorzugsweise von mit OTTO-Motoren betriebenen Personenkraftwagen und Autobussen, welche ein mit einem elektropneumatischen Steuerventil verbundenes, die Kupplung betätigendes, pneumatisches Arbeitsorgan aufweist, wobei das elektropneumatische Steuerventil mit einer, an dem Saugrohr des Motors angeschlossenen Vakuumleitung, oder über eine Drosselung mit der Aussenluft verbunden werden kann, ferner mit einem, dem Gangschalthebel zugeordneten elektrischen Schalter in elektrischer Verbindung steht, dadurch **gekennzeichnet,** dass sie als am Kraftfahrzeug - mit unveränderter Beibehaltung der ursprünglichen Baubestandteile und deren originaler, funktioneller Betriebsweise - auch nachträglich einbaubarer zusätzlicher Adapter (6) ausgestaltet ist, wobei das elektropneumatische Steuerventil (12) mit einer drehzahlabhängigen Steuereinheit (20) verbunden ist, und dass parallel zum elektropneumatischen Steuerventil (12) zwischen die Vakuumleitung (13) und die Luftleitung (14) des pneumatischen Arbeitsorgans, vorzugsweise einer Membrane (9),ein depressionabhängiges Drosselventil (19) eingebaut ist.

2. Pneumatische Vorrichtung nach Anspruch 1, dadurch **gekennzeichnet,** dass die drehzahlabhängige Steuereinheit (20) einen Elektroschalter (21) hat, der mit der Drosselklappe (2) des Motors in Steuerverbindung steht.

3. Pneumatische Vorrichtung nach Anspruch 1 oder 2, dadurch **gekennzeichnet,** dass die drehzahlabhängige Steuereinheit (20) mit einer elektronischen Reguliereinheit (15) versehen ist, deren eine Eingangsklemme mit einem Drehzahlsignalsender (27), die andere Eingangsklemme mit dem Elektroschalter (21), die dritte Eingangsklemme mit der dem Schalthebel (5) zugeordneten Schalter (11), sowie die Ausgangsklemme mit dem Elektromagneten (43) des elektropneumatischen Steuerventils (12) verbunden ist.

4. Pneumatische Vorrichtung nach einem der Ansprüche 1 - 3 , dadurch **gekennzeichnet,** dass die mit der Aussenluft in Verbindung stehende Öffnung (38) des elektropneumatischen Steuerventils (12) an einen Luftbehälter (39) anschliesst, dessen Einströmöffnung (40) mit einem vorzugsweise regulierbaren Drosselventil (41) versehen ist.

Fig. 1

0 281 869

Fig. 2

Fig. 3

## EINSCHLÄGIGE DOKUMENTE

EP 88102857.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 1 137 323 (BORG WARNER CORP.)<br>* Gesamt *<br>-- | 1,2 | B 60 K 23/02<br>B 60 K 17/02 |
| A | DE - A - 2 906 587 (VOLKSWAGENWERK AG)<br>* Gesamt *<br>-- | 1,2,3 | |
| A | DE - A - 2 946 497 (VOLKSWAGENWERK AG)<br>* Gesamt *<br>-- | 1,2,3 | |
| A | DE - A - 3 004 930 (VOLKSWAGENWERK AG)<br>* Gesamt *<br>---- | 1,2,3 | |

**RECHERCHIERTE SACHGEBIETE (Int. Cl.4)**

B 60 K

Der vorliegende Recherchenbericht wurde für alle Patentansprüche erstellt.

| Recherchenort | Abschlußdatum der Recherche | Prüfer |
|---|---|---|
| WIEN | 15-06-1988 | ZINN-ZINNENBURG |

EPA Form 1503 03 82